# EUROPÄISCHE PATENTSCHRIFT

(11) **EP 3 173 255 B1**
(45) Veröffentlichungstag und Bekanntmachung des Hinweises auf die Patenterteilung: **31.10.2018**
(21) Anmeldenummer: 16183372.8
(22) Anmeldetag: 09.08.2016
(51) Int. Cl.: B60C 11/13, B60C 11/03

(54) **FAHRZEUGLUFTREIFEN**
PNEUMATIC TYRES FOR A VEHICLE
PNEUMATIQUES DE VÉHICULE

(30) Priorität: 27.11.2015 DE 102015223535
(43) Veröffentlichungstag der Anmeldung: 31.05.2017
(73) Patentinhaber: Continental Reifen Deutschland GmbH, 30165 Hannover (DE)
(72) Erfinder: Boston, Charles Henry, 30175 Hannover (DE); Herbst, Stephan, 30855 Langenhagen (DE); Rittweger, Stefan, 30826 Garbsen (DE); Nette, Daniel, 30890 Barsinghausen (DE)
(74) Vertreter: Finger, Karsten

(56) Entgegenhaltungen:
- JP-A- 2007 008 427
- JP-A- 2011 140 254

## Beschreibung

Die Erfindung betrifft einen Fahrzeugluftreifen mit einem Laufstreifen mit zumindest einer in Profilblöcke gegliederten oder blockartig strukturierten Profilrippe, welche sich in Umfangsrichtung aus aufeinanderfolgenden Pitches mit zumindest zwei unterschiedlichen Umfangslängen zusammensetzt, wobei jeder Pitch einen Profilblock und eine an diesen in Umfangsrichtung angrenzende Rille umfasst, wobei in einem Pitch größerer Umfangslänge der Profilblock eine größere Umfangserstreckung und die zugehörige Rille ein größere Breite aufweisen, wobei die Rillen zumindest einen unter einem Winkel von bis zu 45° zur axialen Richtung verlaufenden Rillenabschnitt aufweisen, wobei auf den Profilblöcken Rippen ausgebildet sind, welche sich zumindest unmittelbar an diesen Rillenabschnitt angrenzend erstrecken sowie gegenüber der jeweiligen Profilblockoberfläche in radialer Richtung jeweils eine Höhe von 0,2 mm bis 0,5 mm und an ihrer Basis jeweils eine Breite von 0,7 mm bis 1,9 mm aufweisen.

Zur Verminderung des Abrollgeräusches eines Fahrzeugluftreifens ist es üblich, den im Laufstreifen über seinen Umfang aufeinanderfolgenden gleichartigen Profilabschnitten, sogenannten Pitches, unterschiedliche Umfangslängen zuzuordnen. Dabei werden in Laufstreifen üblicherweise Pitches mit zwei bis fünf unterschiedlichen Umfangslängen vorgesehen. Durch eine bestimmte Aufeinanderfolge dieser Pitches über den Umfang in einer sogenannten Pitchfolge wird ein breites Frequenzspektrum generiert und das Abrollgeräusch optimiert.

Ein Reifen der eingangs genannten Art ist beispielsweise aus der DE 699 17 139 T2 bekannt. Der Laufstreifen dieses Reifens weist Profilblöcke auf, an deren Oberflächen Rippen vorgesehen sind, welche sich entlang sämtlicher Kanten jedes Profilblockes und daher auch entlang von Querrillen erstrecken. Jeder Profilblock ist ferner mit zumindest einer schmalen Rille mit einer Breite und Tiefe von jeweils 0,3 mm bis 0,5 mm versehen, welche sich zumindest zu einer der Rippen erstreckt. Vorzugsweise ist eine Vielzahl derartiger Rillen vorgesehen, welche in ihrer Gesamtheit in Draufsicht gitterartig verlaufen. Die Rippen weisen in radialer Richtung vorzugsweise jeweils eine Höhe von 0,3 mm bis 1,5 mm auf. Die Breite der Rippen an ihrer Basis beträgt 0,3 mm bis 1,5 mm. Dank derartiger Rippen soll eine Luftabführung bei der Vulkanisation ohne Entlüftungsbohrungen in der Vulkanisationsform möglich sein.

Aus der DE 37 09 427 A1 ist ein Fahrzeugluftreifen mit einem Laufstreifen mit Profilblöcken bekannt, an deren Oberflächen sich in Umfangsrichtung erstreckende Rippen mit einer Höhe von 0,3 mm bis 0,5 mm vorgesehen sind. Die Rippen können sich entweder entlang einer Profilblockkante oder von einer Profilblockkante ausgehend in Draufsicht in den Profilblock hineinerstrecken und sollen zu einer Reduktion des Abrollgeräusches beitragen.

Aus der gattungsgemäßen JP 2011 140254 ist ein Fahrzeugluftreifen mit einem Laufstreifen mit Profilblöcken bekannt, wobei an den Querkanten der Profilblöcke zur Geräuschreduktion Rippen mit einer Höhe und einer Breite von von 0,2 mm bis 2,0 mm vorgesehen sind.

Es ist bekannt, dass das Abrollgeräusch von neuen Reifen bzw. das von neuen Reifen generierte Reifen/Fahrbahngeräusch unangenehmer, insbesondere "lauter", ist als jenes von Reifen, deren Laufstreifen schon etwas abgefahren ist. Dieser Effekt ist vor allem auf die größere Rillentiefe und die größere Beweglichkeit der Profilpositive von neuen Reifen zurückzuführen. Im Geräuschspektrum macht sich dieser Effekt vor allem durch höhere Amplituden bemerkbar.

Der Erfindung liegt daher die Aufgabe zugrunde, das Abrollgeräusch eines Reifens der eingangs genannten Art im Neuzustand des Reifens zu verringern.

Die gestellte Aufgabe wird erfindungsgemäß dadurch gelöst, dass die auf in Umfangsrichtung aufeinanderfolgenden Profilblöcken und an dieselbe Rille bzw. denselben Rillenabschnitt angrenzend ausgebildeten Rippen zumindest im Wesentlichen übereinstimmend breit sind, wobei diese Rippen umso breiter sind je breiter die an sie angrenzende Rille ist.

Die erfindungsgemäß auf den Profilblöcken vorgesehenen Rippen tragen maßgeblich zur Reduktion des Abrollgeräusches des Reifens im neuen Zustand bei. Durch die Rippen gelingt es nämlich, Verformungen der Profilpositive beim Abrollen derart zu beeinflussen, dass die erwähnten Amplituden im angeregten Geräuschspektrum deutlich geringer sind. Darüber hinaus begünstigen die Rippen beim Abrollen die Entstehung von Schallwellen, welche eine Auslöschung von den sich in den Rillen bildenden Schallwellen bewirken (destruktive Interferenz). Vorteilhafterweise sind erfindungsgemäße Rippen zumindest im Bereich von Rillenabschnitten, welche unter Winkel von bis zu 45° zur axialen Richtung verlaufen, vorgesehen, da die beim Abrollen des Reifens am Untergrund durch das Auftreffen der in diesen Bereichen liegenden Querkanten der Profilblöcke gebildeten Schallwellen besonders ausgeprägt sind.

Bei einer bevorzugten Ausführungsform der Erfindung beträgt die Breitendifferenz der unterschiedlich breiten Rippen mindestens 0,2 mm. Diese Maßnahme ermöglicht eine besonders gute Anpassung der Rippen an die üblichen Pitchlängenverhältnisse und damit eine besonders deutlich wahrnehmbare Geräuschreduktion.

Die Höhe der Rippen beträgt erfindungsgemäß und vorzugsweise bis zu 0,3 mm. Der Effekt der Geräuschreduktion ist somit vor allem im Neuzustand des Reifens gegeben, wobei die geringe Höhe der Rippen andere erwünschte Laufstreifeneigenschaften, etwa einen gleichmäßigen Abrieb, unbeeinflusst lässt.

Bei einer weiteren bevorzugten Ausführungsform der Erfindung können die Rippen auch entlang von weiteren Kanten des jeweiligen Profilblockes verlaufen und somit auch den Profilblock umranden bzw. umlaufen. Diese Maßnahme ist für einen gleichmäßigen Abrieb des Reifens von Vorteil.

Der mit der Erfindung erzielbare technische Effekt, die Reduktion des Reifens/Fahrbahngeräusches, ist dann besonders deutlich, wenn gemäß einem weiteren Merkmal der Erfindung die Breite einer an eine Rille angrenzend ausgebildeten Rippe zur Breite dieser Rille in einem Verhältnis zueinander sind, welches in allen Pitches unterschiedlicher Umfangslängen zumindest im Wesentlichen gleich groß ist.

Um bei guter Geräuschreduktion nachteilige Auswirkungen auf andere Laufstreifeneigenschaften, wie einen gleichmäßigen Abrieb, zu vermeiden sind bestimmte Breiten der Rippen besonders vorteilhaft. Sind die Profilstrukturen des Laufstreifens in drei Pitches mit unterschiedlichen Umfangslängen gegliedert, beträgt vorzugsweise die an der Basis vorliegende Breite der Rippen mit der geringsten Breite 0,7 mm bis 1,3 mm. Die an die in Pitches mit der mittleren Umfangslänge befindlichen Rillen angrenzend ausgebildeten Rippen sollten jeweils eine Breite von 0,9 mm bis 1,6 mm aufweisen. Die an der Basis vorliegende Breite der Rippen mit der größten Breite beträgt vorzugsweise 1,1 mm bis 1,9 mm.

Die Rippen können verschiedene Querschnittsformen aufweisen. Für einen gleichmäßigen Abrieb der Rippen ist es von besonderem Vorteil, wenn diese an ihrem der Rille abgewandten Bereich eine Rippenflanke aufweisen, welche im Querschnitt konvex gerundet ist. Bei weiteren bevorzugten Ausführungsformen sind die Rippen im Querschnitt im Wesentlichen trapezförmig oder rechteckig, bei anderen bevorzugten Ausführungsformen im Querschnitt gerundet, vorzugsweise kreissegmentförmig oder halbkreisförmig.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Ausschnitt eines Umfangsbereiches eines Laufstreifens eines Fahrzeugluftreifens mit einer Ausführungsvariante der Erfindung,
Fig. 2 einen Schnitt entlang der Linie II-II der Fig. 1 und
Fig. 3 eine vergrößerte Ansicht eines Teilbereiches des Schnittes aus Fig. 2.

Erfindungsgemäß ausgeführte Fahrzeugluftreifen sind Reifen in Radialbauart insbesondere für PKW, Vans oder Light-Trucks.

Im Rahmen der gegenständlichen Erfindung wird unter einer Profilrippe sowohl eine durch durchgehende Querrillen voneinander getrennte Profilblöcke aufweisende Profilblockreihe als auch ein mit sacknutartig endenden Quer- und oder Schrägrillen versehenes Profilband verstanden, welches somit blockartig strukturiert ist.

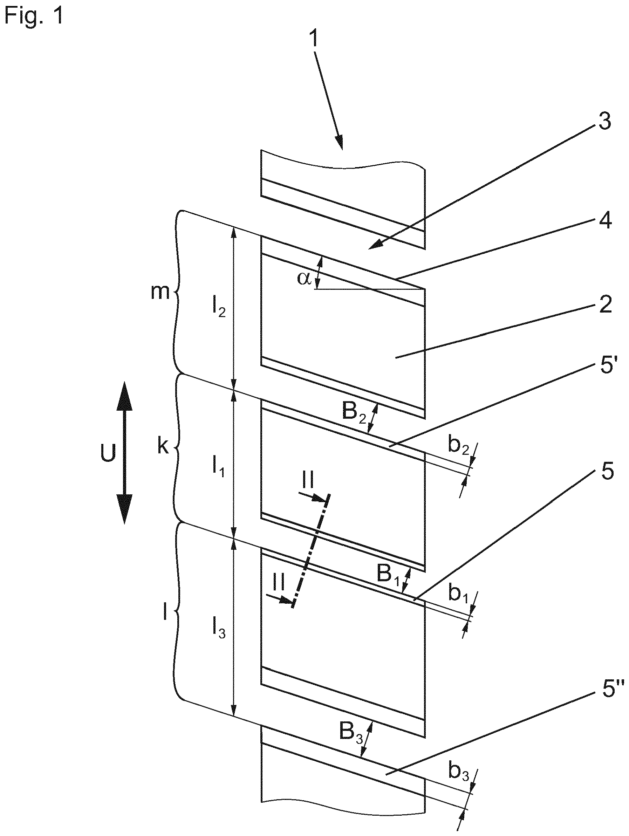

In Fig. 1 sind von einem Laufstreifen eines Fahrzeugluftreifens ein Umfangsabschnitt einer im mittleren Laufstreifenbereich in Umfangsrichtung U umlaufenden Profilrippe 1, welche durch Querrillen 3 voneinander getrennte Profilblöcke 2 aufweist und demgemäß als Profilblockreihe ausgeführt ist, dargestellt. Die Profilrippe 1 ist seitlich von in Fig. 1 nicht gezeigten Umfangsrillen begrenzt. Sämtliche Querrillen 3 verlaufen in der schematischen Darstellung parallel zueinander und erstrecken sich jeweils unter einem Winkel α zur axialen Richtung von bis zu 45°, können daher auch in axialer Richtung verlaufen.

Die Profilrippe 1 setzt sich aus in Umfangsrichtung U aufeinanderfolgenden gleichartig gestalteten Profilabschnitten, sogenannten Pitches k, 1 und m, welche beim gezeigten Beispiel in drei unterschiedlichen Umfangslängen l₁, l₂, l₃ vorgesehen sind, zusammen. In Fig. 1 ist eine Aufeinanderfolge eines Pitches m mit der mittleren Umfangslänge l₂, eines Pitches k mit der kleinsten Umfangslänge l₁ und eines Pitches l mit der größten Umfangslänge l₃ beispielhaft vorgesehen. Die Pitches k, m, l werden über die Umfangserstreckung der Profilrippe 1 innerhalb einer sogenannten Pitchfolge, die üblicherweise rechnerisch ermittelt wird, angeordnet.

Jedes Pitch k, m, l umfasst einen Profilblock 2 mitsamt der einen in Umfangsrichtung U angrenzenden Querrille 3, wobei die Umfangserstreckungen der Profilblöcke 2 und die Breiten B₁, B₂, B₃ der Querrillen 3 mit den Umfangslängen l₁, l₂, l₃ der Pitches k, m, l korrelieren. Die Grenzen zwischen den Pitches k, m, l verlaufen jeweils entlang einer der Profilblockkanten der Profilblöcke 2.

Der zu jedem Pitch k gehörende Profilblock 2 weist somit die kleinste Umfangserstreckung, die zum Pitch k gehörende Querrille 3 die kleinste Breite B₁ auf, welche beispielsweise 7,0 mm beträgt. Der zu jedem Pitch l gehörende Profilblock 2 weist die größte Umfangserstreckung auf, die zum Pitch l gehörende Querrille 3 weist die größte Breite B₃ auf, welche beispielsweise 9,0 mm beträgt. Der zu jedem Pitch m gehörende Profilblock 2 weist die zweitgrößte Umfangserstreckung auf, die zum Pitch m gehörende Querrille 3 weist eine Breite B₂ auf, welche größer ist als die Breite B₁ der Querrille 3 im Pitch k und kleiner ist als Breite B₃ der Querrille 3 im Pitch l, wobei die Breite B₂ beispielsweise 8,0 mm beträgt. Bei Querrillen 3 mit einer über den Querrillenverlauf variierenden Breite ist die Breite jeweils die durchschnittliche Breite.

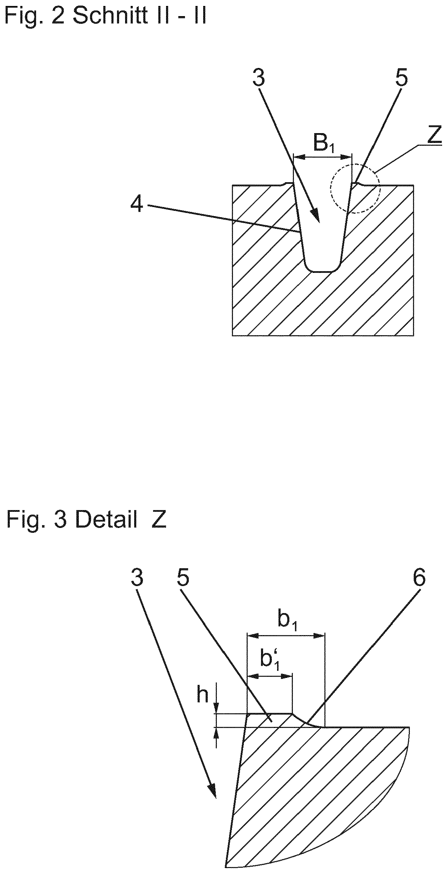

Jeder Profilblock 2 ist bei den beiden an ihn angrenzenden Querrillen 3 durch je eine Blockflanke 4 begrenzt, welche entweder unter einem kleinen spitzen Winkel von vorzugsweise bis zu 10° zur radialen Richtung oder in radialer Richtung verläuft. Auf der Oberfläche jedes Profilblockes 2 ist unmittelbar an jede Querrille 3 angrenzend eine schmale Rippe 5, 5', 5" ausgebildet, welche sich bei der gezeigten Ausführung jeweils entlang der gesamten Länge der Querrille 3 erstreckt und von der in radialer Richtung fortgesetzten, betreffenden Blockflanke 4 begrenzt ist (Fig. 2). Je breiter eine Querrille 3 ist, umso breiter sind die beiden Rippen 5, 5', 5", welche an den durch diese Querrille 3 voneinander getrennten Profilblöcken 2 ausgebildet sind. An dieselbe Querrille 3 angrenzende Rippen 5, 5', 5" sind dabei übereinstimmend breit ausgeführt. Sämtliche Rippen 5, 5', 5" weisen in radialer Richtung gegenüber der Profilblockoberfläche eine Höhe h (Fig. 3) auf, welche 0,2 mm bis 0,5 mm, insbesondere 0,3 mm, beträgt und bei allen vorgesehen Rippen 5, 5', 5" vorzugsweise gleich groß ist.

Die bei Querrillen 3 mit der kleinsten Breite B₁ am Profilblock 2 ausgebildeten Rippen 5 weisen an ihrer Basis an der Blockoberfläche jeweils eine Breite b₁ auf, welche 0,7 mm bis 1,3 mm beträgt. Die Rippen 5" sind jeweils an Profilblöcken 2 ausgebildet, die an Querrillen 3 mit der größten Breite B₃ angrenzen und weisen an ihrer Basis jeweils eine Breite b₃ auf, welche 1,1 mm bis 1,9 mm beträgt. Die jeweils auf Profilblöcken 2, die an Querrillen 3 mit der mittleren Breite B₂ angrenzen, ausgebildeten Rippen 5' weisen an ihrer Basis jeweils eine Breite b₂ auf, welche 0,9 mm bis 1,6 mm beträgt. Die breitesten Rippen 5" sind an ihrer Basis jeweils mindestens 0,2 mm breiter als die Rippen 5' und die Rippen 5' sind an ihrer Basis jeweils mindestens 0,2 mm breiter als die Rippen 5 mit der kleinsten Breite b₁. Die Breiten b₁, b₂ und b₃ der Rippen 5, 5', 5" sind vorzugsweise über die Erstreckung der Rippen 5, 5', 5" zumindest im Wesentlichen konstant.

Bei einer bevorzugten Ausführungsvariante gilt: b₁:B₁ = b₂:B₂ = b₃:B₃

Bei der dargestellten Ausführung weisen die Rippen 5 an ihrem der Querrille 3 abgewandten Bereich eine Rippenflanke 6 auf. Gemäß Fig. 3, welche einen Querschnitt im Bereich einer Rippe 5 mit der Breite b₁ an der Basis zeigt, ist die Rippenflanke 6 im Querschnitt konvex gerundet. Die Rippe 5 weist eine Oberfläche auf, die parallel zur Oberfläche des Profilblockes 2 verläuft. An ihrer Oberfläche weist die Rippe 5 eine Breite b₁' auf, welche 0,7 mm bis 0,9 mm, vorzugsweise 0,8 mm, beträgt. Auf analoge Weise weisen die Rippen 5" eine Oberfläche auf, deren Breite von 1,1 mm bis 1,3 mm, vorzugsweise 1,2 mm, beträgt. Die an der Oberfläche ermittelten Breite der Rippen 5' beträgt 0,9 mm bis 1,1 mm, vorzugsweise 1,0 mm.

Sämtliche Rippen 5, 5', 5" sind im Querschnitt betrachtet - abgesehen von ihrer jeweiligen Breite b₁, b₂, b₃ sowie ihrer jeweiligen Breite an ihrer Oberseite - vorzugsweise übereinstimmend ausgeführt.

Die Rippen 5, 5', 5" können im Querschnitt beispielsweise auch rechteckig, gerundet, beispielsweise kreissegementförmig oder etwa halbkreisförmig, ausgeführt sein, wobei ihre jeweilige Breite an der Basis im Bereich der oben erwähnten Werte für die Breiten b₁, b₂, b₃ liegt.

Wie bereits beschrieben verlaufen die Rippen 5, 5', 5" bei der in Fig. 1 gezeigten Ausführungsvariante jeweils entlang der gesamten Erstreckung der jeweiligen Querrille 3. Grundsätzlich sind die Rippen 5, 5', 5" an jenen Bereichen von Profilblöcken ausgebildet, welche von Rillen oder Rillenabschnitten, welche sich unter einem Winkel von bis zu 45° zur axialen Richtung erstrecken, begrenzt sind. Bei Rillenabschnitten gilt, dass diese sich zumindest über 10 mm erstrecken.

Bei einer weiteren Ausführungsvariante sind die Profilblöcke randseitig komplett von Rippen umlaufen, wobei die sich im Umfangsrichtung erstreckenden Rippen an ihrer Basis vorzugsweise jeweils eine Breite aufweisen, die der Breite der bei einer bei einer Querrille vorhandenen Rippe entspricht. Die Breite dieser "Umfangsrippen" ist nicht an die Breite der erfindungsgemäß ausgeführten Rippen gebunden, wird jedoch an deren Breiten angepasst.

### Bezugsziffernliste

1 ....................................Profilrippe
2 ....................................Profilblock
3 ....................................Querrille
4 ....................................Blockflanke
5, 5', 5" .........................Rippe
6 ....................................Rippenflanke
l₁, l₂, l₃ ........................... Pitchlänge
B₁, B₂, B₃ ......................Breite
b₁, b₂, b₃, b₁', b₂', b₃' .....Breite
h ....................................Höhe

## Patentansprüche

1. Fahrzeugluftreifen mit einem Laufstreifen mit zumindest einer in Profilblöcke (2) gegliederten oder blockartig strukturierten Profilrippe (1), welche sich in Umfangsrichtung (U) aus aufeinanderfolgenden Pitches (k, m, l) mit zumindest zwei unterschiedlichen Umfangslängen (l₁, l₂, l₃) zusammensetzt, wobei jeder Pitch (k, m, l) einen Profilblock (2) und eine an diesen in Umfangsrichtung (U) angrenzende Rille (3) umfasst, wobei in einem Pitch (k , m, l) größerer Umfangslänge (l₁, l₂, l₃) der Profilblock (2) eine größere Umfangserstreckung und die zugehörige Rille (3) ein größere Breite (B₁, B₂, B₃) aufweisen, wobei die Rillen (3) zumindest einen unter einem Winkel von bis zu 45° zur axialen Richtung verlaufenden Rillenabschnitt aufweisen, wobei auf den Profilblöcken (2) Rippen (5', 5', 5") ausgebildet sind, welche sich zumindest unmittelbar an diesen Rillenabschnitt angrenzend erstrecken sowie gegenüber der jeweiligen Profilblockoberfläche in radialer Richtung jeweils eine Höhe (h₁) von 0,2 mm bis 0,5 mm und an ihrer Basis jeweils eine Breite (b₁, b₂, b₃) von 0,7 mm bis 1,9 mm aufweisen,
**dadurch gekennzeichnet,**
**dass** die auf in Umfangsrichtung (U) aufeinanderfolgenden Profilblöcken (2) und an dieselbe Rille (3) bzw. denselben Rillenabschnitt angrenzend ausgebildeten Rippen (5, 5', 5") zumindest im Wesentlichen übereinstimmend breit sind, wobei diese Rippen (5, 5', 5") umso breiter sind je breiter die an sie angrenzende Rille (3) ist.

2. Fahrzeugluftreifen nach Anspruch 1, **dadurch gekennzeichnet, dass** die Breitendifferenz der unterschiedlich breiten Rippen (5, 5', 5") mindestens 0,2 mm beträgt.

3. Fahrzeugluftreifen nach Anspruch 1 oder 2, **dadurch gekennzeichnet, dass** die Höhe (h₁) der Rippen (5, 5', 5") bis zu 0,3 mm beträgt.

4. Fahrzeugluftreifen nach einem der Ansprüche 1 bis 3, **dadurch gekennzeichnet, dass** auf der Oberfläche jedes Profilblockes (2) den Profilblock umrandende bzw. umlaufende Rippen angeordnet sind.

5. Fahrzeugluftreifen nach einem der Ansprüche 1 bis 4, **dadurch gekennzeichnet, dass** die Breite (B₁, B₂, B₃) einer an eine Rille (3) angrenzend ausgebildeten Rippe (5, 5', 5") zur Breite (b₁, b₂, b₃) dieser Rille (3) in einem Verhältnis zueinander sind, welches in allen Pitches (k, m, l) zumindest im Wesentlichen gleich groß.

6. Fahrzeugluftreifen, bei welchem sich die zumindest eine in Profilblöcke (2) gegliederte oder blockartig strukturierte Profilrippe (1) aus Pitches (k, m, l) mit drei unterschiedlichen Umfangslängen (l₁, l₂, l₃) zusammensetzt, nach einem der Ansprüche 1 bis 5, **dadurch gekennzeichnet, dass** die an der Basis vorliegende Breite (b₁) der Rippen (5) mit der geringsten Breite 0,7 mm bis 1,3 mm beträgt.

7. Fahrzeugluftreifen nach Anspruch 6, **dadurch gekennzeichnet, dass** die an die in Pitches (m) mit der mittleren Umfangslänge (l₂) befindlichen Rillen (3) angrenzend ausgebildeten Rippen (5') an ihrer Basis jeweils eine Breite (b₂) von 0,9 mm bis 1,6 mm aufweisen.

8. Fahrzeugluftreifen nach einem der Ansprüche 1 bis 7, **dadurch gekennzeichnet, dass** die an der Basis vorliegende Breite (b₃) der Rippen (5") mit der größten Breite 1,1 mm bis 1,9 mm beträgt.

9. Fahrzeugluftreifen nach einem der Ansprüche 1 bis 8, **dadurch gekennzeichnet, dass** die Rippen (5, 5', 5") an ihrem der Rille (3) abgewandten Bereich jeweils eine Rippenflanke (6) aufweisen, welche im Querschnitt konvex gerundet ist.

10. Fahrzeugluftreifen nach einem der Ansprüche 1 bis 8, **dadurch gekennzeichnet, dass** die Rippen (5, 5', 5") im Querschnitt im Wesentlichen trapezförmig oder rechteckig sind.

11. Fahrzeugluftreifen nach einem der Ansprüche 1 bis 9, **dadurch gekennzeichnet, dass** die Rippen (5, 5', 5") im Querschnitt gerundet, vorzugsweise kreissegementförmig, besonders bevorzugt halbkreisförmig, sind.

## Claims

1. Pneumatic vehicle tyre comprising a tread with at least one profile rib (1), which is divided into profile blocks (2) or is structured in the manner of blocks and is made up in the circumferential direction (U) of successive pitches (k, m, 1) with at least two different circumferential lengths (l₁, l₂, l₃), wherein each pitch (k, m, 1) comprises a profile block (2) and a groove (3) adjacent thereto in the circumferential direction (U), wherein, in a pitch (k, m, 1) of greater circumferential length (l₁, l₂, l₃), the profile block (2) has a greater circumferential extent and the associated groove (3) has a greater width (B₁, B₂, B₃), wherein the grooves (3) have at least one groove portion running at an angle of up to 45° in relation to the axial direction, wherein on the profile blocks (2) ribs (5, 5', 5") are formed, extending at least directly adjacent to this groove portion and having in each case with respect to the respective profile block surface in the radial direction a height (h₁) of 0.2 mm to 0.5 mm and at their base in each case a width (b₁, b₂, b₃) of 0.7 mm to 1.9 mm,
**characterized**
**in that** the profile blocks (2) succeeding one another in the circumferential direction (U) and ribs (5, 5', 5") formed adjacent to the same groove (3) or the same groove portion are at least substantially of matching widths, wherein these ribs (5, 5', 5") are all the wider the wider the groove (3) adjacent to them is.

2. Pneumatic vehicle tyre according to Claim 1, **characterized in that** the difference in width of the ribs (5, 5', 5") of different widths is at least 0.2 mm.

3. Pneumatic vehicle tyre according to Claim 1 or 2, **characterized in that** the height (hi) of the ribs (5, 5', 5") is up to 0.3 mm.

4. Pneumatic vehicle tyre according to one of Claims 1 to 3, **characterized in that** arranged on the surface of each profile block (2) are ribs bordering or running around the profile block.

5. Pneumatic vehicle tyre according to one of Claims 1 to 4, **characterized in that** the width (B₁, B₂, B₃) of a rib (5, 5', 5") formed adjacent to a groove (3) is in a relation to the width (b₁, b₂, b₃) of this groove (3) that is at least substantially the same in all of the pitches (k, m, 1).

6. Pneumatic vehicle tyre, in which the at least one profile rib (1) that is divided into profile blocks (2) or is structured in the manner of blocks is made up of pitches (k, m, 1) with three different circumferential lengths (l₁, l₂, l₃), according to one of Claims 1 to 5, **characterized in that** the width (b₁) at the base of the ribs (5) with the smallest width is 0.7 mm to 1.3 mm.

7. Pneumatic vehicle tyre according to Claim 6, **characterized in that** the ribs (5') formed adjacent to the grooves (3) that are in pitches (m) with the middle circumferential length (l₂) have at their base in each case a width (b₂) of 0.9 mm to 1.6 mm.

8. Pneumatic vehicle tyre according to one of Claims 1 to 7, **characterized in that** the width (b₃) at the base of the ribs (5") with the greatest width is 1.1 mm to 1.9 mm.

9. Pneumatic vehicle tyre according to one of Claims 1 to 8, **characterized in that** the ribs (5, 5', 5") have at their region facing away from the groove (3) in each case a rib flank (6) that is convexly rounded in cross section.

10. Pneumatic vehicle tyre according to one of Claims 1 to 8, **characterized in that** the ribs (5, 5', 5") are substantially trapezoidal or rectangular in cross section.

11. Pneumatic vehicle tyre according to one of Claims 1 to 9, **characterized in that** the ribs (5, 5', 5") are rounded in cross section, preferably in the form of segments of a circle, with particular preference in the form of a semicircle.

## Revendications

1. Pneumatique de véhicule comprenant une bande de roulement avec au moins une nervure profilée (1) divisée en blocs profilés (2) ou structurée en forme de blocs, qui se compose, dans la direction périphérique (U), de pas successifs (k, m, l) avec au moins deux longueurs périphériques différentes (l₁, l₂, l₃), chaque pas (k, m, l) comprenant un bloc profilé (2) et une rainure (3) adjacente à celui-ci dans la direction périphérique (U), le bloc profilé (2), dans un pas (k, m, l) de plus grande longueur périphérique (l₁, l₂, l₃), présentant une plus grande étendue périphérique et la rainure associée (3) présentant une plus grande largeur (B₁, B₂, B₃), les rainures (3) présentant au moins une portion de rainure s'étendant suivant un angle de jusqu'à 45° par rapport à la direction axiale, des nervures (5', 5', 5") étant réalisées sur les blocs profilés (2), lesquelles s'étendent de manière au moins directement adjacente à cette portion de rainure et présentent par rapport à la surface de bloc profilé respective dans la direction radiale à chaque fois une hauteur (h₁) de 0,2 mm à 0,5 mm et, au niveau de leur base, à chaque fois une largeur (b₁, b₂, b₃) de 0,7 mm à 1,9 mm,
**caractérisé en ce que**
les nervures (5, 5', 5") réalisées sur des blocs profilés (2) successifs dans la direction périphérique (U) et de manière adjacente à la même rainure (3) ou à la même portion de rainure ont au moins essentiellement une largeur coïncidente, ces nervures (5, 5', 5") étant d'autant plus larges que la rainure (3) qui leur est adjacente est large.

2. Pneumatique de véhicule selon la revendication 1, **caractérisé en ce que** la différence de largeur des nervures de largeurs différentes (5, 5', 5") vaut au moins 0,2 mm.

3. Pneumatique de véhicule selon la revendication 1 ou 2, **caractérisé en ce que** la hauteur (h₁) de la nervure (5, 5', 5") vaut jusqu'à 0,3 mm.

4. Pneumatique de véhicule selon l'une quelconque des revendications 1 à 3, **caractérisé en ce que** sur la surface de chaque bloc profilé (2) sont disposées des nervures entourant ou s'étendant sur la périphérie du bloc profilé.

5. Pneumatique de véhicule selon l'une quelconque des revendications 1 à 4, **caractérisé en ce que** le rapport de la largeur (B₁, B₂, B₃) d'une nervure (5, 5', 5") réalisée de manière adjacente à une rainure (3) à la largeur (b₁, b₂, b₃) de cette rainure (3) est au moins essentiellement identique pour tous les pas (k, m, 1).

6. Pneumatique de véhicule dans lequel l'au moins une nervure profilée (1) divisée en blocs profilés (2) ou structurée en forme de blocs se compose de pas (k, m, l) avec trois longueurs périphériques différentes (l₁, l₂, l₃) selon l'une quelconque des revendications 1 à 5, **caractérisé en ce que** la largeur (b₁) présente au niveau de la base des nervures (5) ayant la plus faible largeur est comprise entre 0,7 mm et 1,3 mm.

7. Pneumatique de véhicule selon la revendication 6, **caractérisé en ce que** les nervures (5') réalisées de manière adjacente aux rainures (3) se trouvant dans les pas (m) ayant la longueur périphérique moyenne (l₂) présentent au niveau de leur base à chaque fois une largeur (b₂) de 0,9 mm à 1,6 mm.

8. Pneumatique de véhicule selon l'une quelconque des revendications 1 à 7, **caractérisé en ce que** la largeur (b₃) présente à la base des nervures (5") ayant la plus grande largeur est de 1,1 mm à 1,9 mm.

9. Pneumatique de véhicule selon l'une quelconque des revendications 1 à 8, **caractérisé en ce que** les nervures (5, 5', 5") au niveau de leur région opposée à la rainure (3) présentent à chaque fois un flanc de nervure (6) de section transversale arrondie sous forme convexe.

10. Pneumatique de véhicule selon l'une quelconque des revendications 1 à 8, **caractérisé en ce que** les nervures (5, 5', 5") présentent une section transversale essentiellement trapézoïdale ou rectangulaire.

11. Pneumatique de véhicule selon l'une quelconque des revendications 1 à 9, **caractérisé en ce que** les nervures (5, 5', 5") présentent une section transversale arrondie, de préférence en forme de segment de cercle, particulièrement préférablement en forme de demi-cercle.
